(19) Europäisches Patentamt / European Patent Office / Office européen des brevets

(11) **EP 1 986 155 A2**

(12) **EUROPEAN PATENT APPLICATION**

(43) Date of publication:
29.10.2008 Bulletin 2008/44

(51) Int Cl.:
*G06T 7/00* (2006.01)

(21) Application number: 08250902.7

(22) Date of filing: 17.03.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 25.04.2007 JP 2007115157

(71) Applicants:
• **Riken**
Wako-shi, Saitama 351-0198 (JP)
• **Takeda Rika Kogyo Co. Ltd**
Shibuya-ku,
Tokyo 150-0021 (JP)

(72) Inventors:
• **Kawabata, Kuniaki**
Wako-shi, Saitama 351-0198 (JP)
• **Komori, Yuta**
Saitama 335-0023 (JP)
• **Mishima, Taketoshi**
Wako-shi, Saitama 351-0198 (JP)
• **Asama, Hajime**
Wako-shi, Saitama 351-0198 (JP)
• **Takeda, Kei**
Tokyo (JP)

(74) Representative: **Duncan, Garreth Andrew et al**
D Young & Co
120 Holborn
London
EC1N 2DY (GB)

(54) **Specimen analysis and acicular region analyzer**

(57) The preset invention provides assistance for visual observation based counting of particles or crystals. In an image of a specimen of an unidentified sample, particles are counted from an image obtained as a result of binarization using a method such as the discriminant analysis method, for example, and crystals are counted from two images using the difference between the images according with different imaging conditions. As an example, in the particle counting, such as a two-step noise removal is performed, and also, for the crystals, alignment and aspect ratio calculation are performed. In particular, the present invention can provide assistance for the dispersion staining method in which asbestos crystals are visually searched for using a phase-contrast microscope.

FIG.2

**Description**

Field of the Invention

The present invention relates to a method for analyzing a specimen included in an image, and an apparatus using the method. More specifically, the present invention relates to a method for counting particle regions and acicular regions using an image processing technique, and an apparatus employing this method.

Background of the Invention

Conventionally, observation under a microscope, a qualitative analysis method using a microscope, has been performed in order to determine whether or not asbestos is contained in a building material. A standardized method for this analysis, "Methods for Measuring the Content of Asbestos in Building Material Products", Japan Industrial Standards, JIS A1481 (Non-Patent Document 1) provides, as qualitative analysis means, two methods: the dispersion staining method using a phase-contrast microscope, and the extinction-angle method using a polarization microscope. In these methods, a preparation prepared by pulverizing a sample extracted from a building material and immersing the pulverized sample in a liquid of known refractive index (hereinafter referred to as "immersion liquid") is visually observed under a phase-contrast microscope or a polarization microscope to determine whether or not fibers exist based on its colors and shapes.

From among the aforementioned dispersion staining method and extinction-angle method, the dispersion staining method using a phase-contrast microscope is frequently used when performing actual measurement. Section 7.1.2.a) of Non-Patent Document 1 above, in which this dispersion staining method is specified in detail, sets forth the dispersion staining method as being a method for qualitative analysis before performing a final quantitative analysis, together with the aforementioned extinction-angle method and the X-ray-used method. Although the dispersion staining method is described as a qualitative analysis in Non-Patent Document 1, the dispersion staining method may be used in practice as a quantitative analysis method (see, for example, "Notice Regarding Methods for Analyzing the Content of Asbestos in Building Materials", Bureau Chief's Notice No. 0821002, Chief of Labor Standards Bureau, Ministry of Health, Labor and Welfare, Japanese Government (Non-Patent Document 2)). Also, a phase-contrast microscope for performing such dispersion staining method with high accuracy is disclosed in JP 2005-338567 A(Patent Document 1) .

When determining whether or not asbestos exists by means of the dispersion staining method according to the description in Non-Patent Document 1 (hereinafter, referred to as the "Official Protocol"), the observer first prepares a specimen (such as a pulverized building material) from a sample (such as a building material) by means of a predetermined method. Then, the observer loads the specimen on the stage of the phase-contrast microscope. Next, the observer sets a dispersion staining objective lens with a magnification of 10x and checks whether there is a fiber that exhibits a dispersion color according to a kind of asbestos (chrysotile, amosite and crocidolite). For a specimen in which a dispersion color has been observed, the observer sets a dispersion staining objective lens with a magnification of 40x, and further, counts all the particles, including fibrous particles, existing within an eyepiece graticule circle with a diameter of 100 $\mu$m seen in the eyepiece lens (10x) of the phase-contrast microscope, and continues the counting while shifting his/her point of view until the total number of particles reaches 1000. The observer then records the kind and particle count of the asbestos exhibiting the dispersion color. In the Official Protocol, since it provides that three specimens are to be prepared for a single sample undergoing the analysis and also since it requires respective immersion liquid for a kind of asbestos, the abovementioned observation and counting are performed for nine specimens in total for a single sample.

Building materials are regulated according to a prescribed regulation value as to whether or not they include fibrous particles that are determined to be asbestos in the total number of particles based on a result of the aforementioned observation. This regulation value was lowered to 0.1% in 2006 from the conventional value of 1%, whereby the regulation has been substantially strengthened (Non-Patent Document 2).

However, it is difficult even for experienced observers to efficiently perform the operation of observing thousands of particles, and there is a problem in that it is necessary for the observers to continue observation with a high level of mental concentration maintained for a long time. In addition, for a sample not containing asbestos, it is necessary to observe all 1000 particles for each specimen to determine whether or not the regulation value is achieved. Accordingly, there is a demand for counting the particles from a specimen and counting or identify fibrous particles that may be asbestos when though such counting and identification are made for preliminary assessment purposes.

Also, JP 2005-233658 A (Patent Document 2) discloses an automatic determination method and judgment apparatus for asbestos. In such method and apparatus, the content of asbestos is calculated using an element map image based on a characteristic X-ray together with a shape map image, that is, using element analysis together with image analysis. In order to do this, analysis means for performing element analysis is required.

[Patent Document 1] JP 2005-338567 A

[Patent Document 2] JP 2005-233658 A

[Non-Patent Document 1] "Methods for Measuring the Content of Asbestos in Building Materials", Japanese Industrial Standards (JIS) A1481, Established on March 25, 2006

[Non-Patent Document 2] "Notice Regarding Methods for Analyzing the Content of Asbestos in Building Materials", Bureau Chief's Notice No. 0821002, August 21, 2006, Ministry of Health, Labor and Welfare, Chief of Labor Standards Bureau, available at http://www.mhlw.go.jp/new-info/kobetu/roudou/sekimen/hourei/dl/060821-2.pdf, last access date: March 22, 2007

Summary of the Invention

An object of the present invention is to solve at least one of the aforementioned problems by analyzing a specimen using an image processing technique.

The present invention involves counting acicular regions or particle regions from an image using an image processing technique, in order to, for example, assist an observer with his/her visual observation-based determination of specimens for qualitative analysis in the aforementioned Official Protocol, or provide a substitute method for visual judgment.

More specifically, the present invention provides a specimen analysis method for analyzing an acicular crystal in a specimen of an unidentified sample using a captured image of the specimen, the method comprising steps of: capturing a first image of an imaging area in the specimen under a first imaging condition; capturing a second image of the imaging area in the specimen under a second imaging condition, the first imaging condition and the second imaging condition being conditions providing mutually different data on an image of the acicular crystal or an area neighboring the image in their captured images; counting a particle region by setting, as an original image, any of the first image, the second image or a third captured image of the imaging area in the specimen, counting the number of regions that have pixel values different from a pixel value of a background in the original image, and at least storing or outputting the result of the counting; and counting an acicular region by obtaining a differential image based on a difference in data between the first image and the second image, selecting acicular regions based on the differential image, counting the number of the selected acicular regions, and at least storing or outputting the result of the counting.

In particular, this technique can be applied to asbestos detection using the dispersion staining method. In other words, the present invention provides an analysis method in which the unidentified sample is an unidentified sample of a pulverized building material; the specimen is a specimen prepared by immersing the sample of the pulverized building material in an immersion liquid having a known refractive index substantially equal to a refractive index of an asbestos crystal of a kind that may be contained in the sample; the first imaging condition and the second imaging condition are conditions for capturing an image of the specimen using a phase-contrast microscope in which their respective azimuths of a polarizer inserted from the specimen to an optical path are different for each condition; the method further includes steps of:

    providing information indicating a possibility that the relevant acicular region is an asbestos crystal in the sample of the pulverized building material; and counting the particle region includes outputting or storing the number of regions counted as the number of observation object particles in the specimen.

Furthermore, the present invention provides an acicular region analysis system. In other words, the present invention provides a specimen analysis system for analyzing an acicular crystal in a specimen of an unidentified sample using a captured image of the specimen, the system comprising: an image capturing unit adapted to take an image of the specimen of the unidentified sample according to a plurality of imaging conditions to capture image data; a first image recording unit for storing first image data for an imaging area in the specimen, the first image data being captured by the image capturing unit according to a first imaging condition; a second image recording unit for storing second image data for the imaging area in the specimen, the second image data being captured by the image capturing unit according to a second imaging condition, the first imaging condition and the second imaging condition being conditions providing mutually different data on an image of the acicular crystal or an area neighboring the image in their taken images; a particle region counting unit that sets any of the first image, the second image or a third image taken of the imaging area in the specimen, as an original image, and at least counts the number of regions in the original image that have pixel values different from a pixel value of a background and outputs the result; an acicular region selecting unit that creates a differential image based on a difference in data between the first image and the second image read from the first image recording unit and the second image recording unit, and selects acicular regions based on the differential image; an acicular region counting unit that counts the selected acicular regions and outputs the result; and a count recording unit for storing the output of at least either the acicular region counting unit or the particle region counting unit as data. Also, it provides an apparatus for an observer to review acicular regions using the analysis system.

An unidentified sample intended by the present invention is a material that can be a specimen to be used for imaging for analyzing acicular crystals. Although solid materials such as building materials are typical examples of this unidentified sample, the solid materials may arbitrarily include mixtures and composite materials, etc., and not only solid materials, but also mixtures of solid materials and liquids such as waste solution and sludge, powders such as substances collected by fibrous trapping materials such as a membrane filter that samples suspended particles from a gas may be used. Furthermore, the collection target can arbitrarily determined; it may be a natural product, such as soil or minerals, a biological sample from a laboratory animal or a human body, or an artificial product created in what is called nanotechnology field. The unidentified sample used in the present invention may be any sample for which existence or non-existence of acicular substances is judged or the acicular substances are counted using an image, for example. The specimen is typically a preparation for a microscope, prepared by processing such unidentified sample to be suitable for observation, and the specific structure and size, etc., are not limited.

The imaging area is an area for which an image that is the object of image processing is captured. As used in the Official Protocol for asbestos detection, the imaging area may have a round shape conforming to a graticule, or for preliminary processing before carrying out the Official Protocol, it may have a quadrangular shape with an appropriate aspect ratio to be suited for computer processing.

The image is typically the whole or a part of an image taken by a microscope using visible light, and may be an arbitrary image with no limitations with regard to the physical means used for imaging and the shape of the image itself, etc. For the subsequent processing, the image is captured in the form of data that can be electronically processed. For the original image, regions having pixel values different from that of the background are counted by grayscaling the original image, for example. The number of target objects is determined by a counting process.

The imaging conditions are conditions for capturing an image. At least a part of the imaging conditions includes a condition enabling selection of a plurality of conditions that may change pixel value data for the image of the acicular crystal or the area neighboring the image. For example, in the dispersion staining analysis method in which asbestos is detected using a phase-contrast microscope, it is possible to operate the phase-contrast microscope so that the azimuth of an analyzer inserted in the optical path is changed while keeping the other conditions (such as magnification, brightness, position) are unchanged; however, the present invention is not limited to this particular case. The imaging conditions in the present invention are not limited to those for capturing an image by the imaging device, and include arbitrary conditions for, for example, changing the conditions for radiation, such as light, used for capturing images and changing the state of the specimen.

The present invention further provides an apparatus for reviewing a specimen and a computer program. These aspects will be clarified by exemplification in the description below.

Brief Description of the Drawings

FIG. 1 is a block diagram illustrating the configuration of an analysis system 100, which is an embodiment of the present invention;
FIG. 2 is a flowchart illustrating an entire processing flow in an embodiment of the present invention;
FIG. 3 is a flowchart illustrating image capture processing in an embodiment of the present invention;
FIG. 4 is a flowchart illustrating processing for identifying a particle candidate region;
FIG. 5 shows an image (A) in which an image taken of a specimen has been grayscaled, an image (B) in which an image taken of a background has been grayscaled, and a background difference image (C) created from these images;
FIG. 6 is a flowchart illustrating particle detection processing;
FIG. 7 is a flowchart illustrating processing for determining a threshold value for a candidate region by means of discriminant analysis in particle detection processing;
FIG. 8 is a flowchart illustrating processing for counting the number of particles;
FIG. 9 is an explanatory diagram illustrating the relationship between a pixel of interest and its neighboring pixels;
FIG. 10 is an explanatory diagram for describing the condition for connecting processing for four neighboring pixels, which is used in labeling processing;
FIG. 11(A) shows the state of an intermediate step at which connection components in the pixels have been connected as a result of labeling after the first scanning, and FIG. 11(B) shows the state in which the connection components in the pixels have been connected as a result of labeling after the second scanning;
FIGS. 12(A) and 12(B) are explanatory diagrams for describing the conditions for processing for connecting eight neighboring pixels, and FIG. 12(C) is an explanatory diagram illustrating an example of the pixels obtained as a result of the processing on which labeling has been performed;
FIG. 13 is a flowchart illustrating processing for identifying an asbestos crystal candidate in an embodiment of the present invention;

FIGS. 14(A) to 14(D) each show an example of an image in a step in processing for identifying an asbestos crystal candidate in an embodiment of the present invention, FIGS. 14(A) and 14(B) each show an image of a specimen, and FIGS. 14(C) and 14(D) show a binary image where td is 100 and a binary image where td is 1000, respectively; and FIG. 15 is a flowchart illustrating processing for detecting an asbestos crystal in an embodiment of the present invention.

Detailed Description of Invention

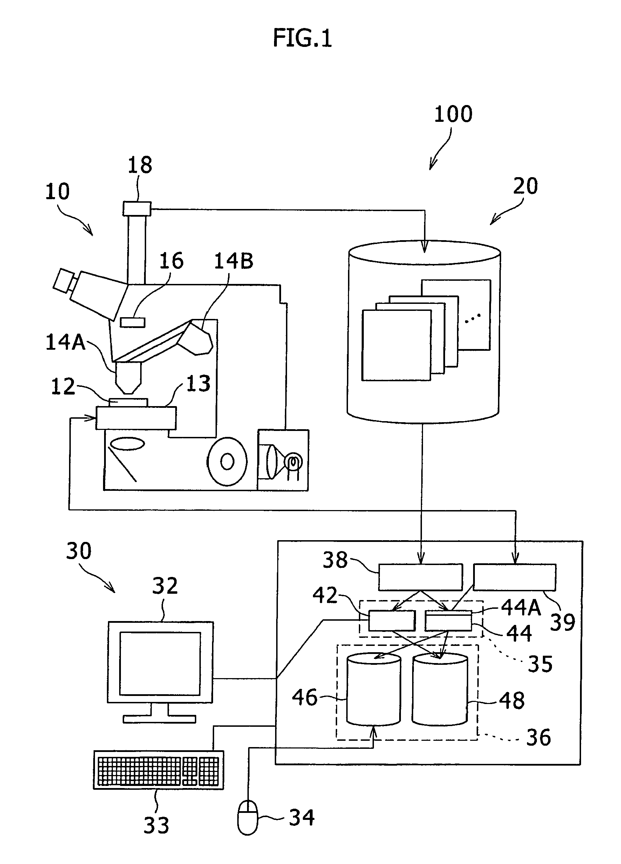

Hereinafter, an embodiment of the present invention will be described with reference to the drawings. FIG. 1 is a block diagram illustrating the configuration of an analysis system 100, which is an embodiment of the present invention. A phase-contrast microscope 10 includes a stage 13 on which a specimen 12 is mounted, and also includes dispersion staining objective lenses 14A and 14B that can be set in a position facing the specimen 12. An image sensor 18 for capturing an image in the form of electric signals is attached to the phase-contrast microscope 10, and an analyzer 16 is disposed at the optical path between the dispersion staining objective lens 14A or 14B and a camera.

An image captured by the image sensor 18 is stored in an arbitrary computer apparatus (not shown), or arbitrary storage means 20, such as image database, that can store images, in such a manner that the stored image can be identified.

The analysis system 100 further includes a computer 30. The computer 30 includes input/output devices such as a display 32, a keyboard 33, a mouse 34, and also includes computing means 35 and storage means 36. Other than these means, the analysis system 100 according to the present embodiment includes an input/output interface unit 38 for capturing image data and a control board 39 for controlling external devices. This input/output interface may be a general-purpose interface such as IEEE1394 or USB, for example. Also, the control board for controlling external devices may be a device control interface such as GP-IB, for example.

In the computer 30 in the analysis system 100 according to the embodiment of the present invention, a particle counting unit 42 and an acicular region counting unit 44 are provided by means of the computing means 35, and the particle count recording unit 46 and an acicular region count recording unit 48 are also provided by means of the storage means 36. The acicular region counting unit 44 includes an acicular region selecting unit 44A.

The computer 30 can read data from, for example, an image file or an image record in the storage means 20 that stores images.

The present embodiment can be provided by means of the aforementioned device configuration. Hereinafter, specific processing according to the present embodiment will be described with reference to the drawings.

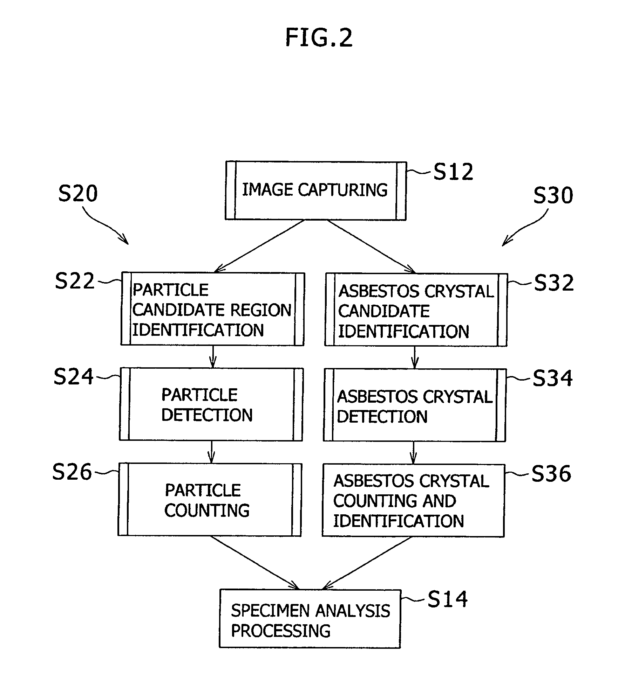

FIG. 2 is a flowchart illustrating the overview of processing according to the embodiment of the present invention. In the present embodiment, an image is captured using the analysis system 100 shown in FIG. 1 (S12), and particle counting processing S20 and acicular region counting processing S30 are performed using the captured image, and specimen analysis processing S14 using these data is performed.

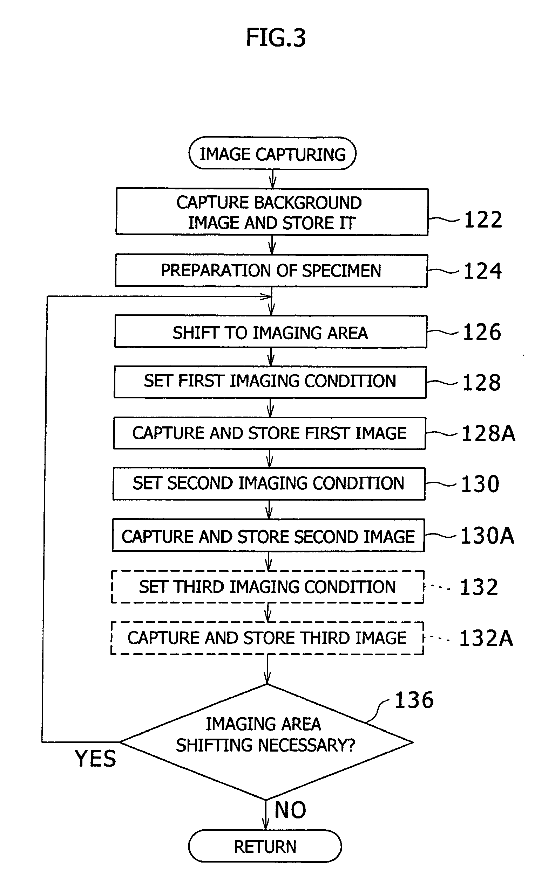

FIG. 3 is a flowchart illustrating the image capture processing S12. In capturing an image, a clean preparation slide with no sample contained is provided to take an image of it (S122). As a result, data on irregularities due to illumination and image-taking in the phase-contrast microscope 10 is obtained, and hereinafter, this is referred to as the "background image". The background image is stored in proper storage means (for example, storage means 20).

Before capturing images, the specimen is provided (S124). The specimen is prepared in advance from a sample, such as a building material, that is the target of the analysis. The processing at this stage is performed according to, for example, the procedure set forth in the Official Protocol. The thus-provided specimen is loaded on the stage 13 in the form of a preparation. In the case of employing automatic measurement, for example, the specimen can be loaded on a stage, etc., that can perform preset operations, by means of a proper loader (not shown), etc. The thus-provided specimen then proceeds to image capturing. In order to record which position is imaged, the stage 13 includes coordinate detection means (not shown) such as a rotary encoder, and such record may be stored in relation to image data. In that case, information indicating the relationship with the image data can be stored in the storage means 36 shown in FIG. 1.

Image capturing starts from a step where the stage 13 is moved to the imaging area (S126) so that the imaging area such as the particular position of the preparation, for example, is included in the field of view of the microscope. Next, a first imaging condition is set (S128), and then a first image is taken according to the first imaging condition (S128A). Imaging condition setting and image capturing according to that condition are repeated at least twice, including this processing for the first image; thus, second imaging condition setting (S130) and second image-taking are also performed (S130A). Here, the first imaging condition and the second imaging condition are conditions that provide mutually different data on the image of an acicular crystal and an area neighboring the image in their captured images. As an example of such case, in the Official Protocol, in order to detect a tone difference generating in a birefringent material (crystal) such as asbestos when the analyzer 16 is inserted into the optical path, it is possible to, for example, set the first imaging condition so as to provide image-taking with the analyzer set at an azimuth, and set the second imaging condition so as to provide image-taking with the analyzer set at another azimuth perpendicular to that azimuth.

Furthermore, as necessary, it is possible to set a third imaging condition (S132), and capture a third image (S132A). This third imaging condition can be set as an imaging condition that, when it is necessary to count the number of particles imaged in the Official Protocol, for example, is useful for the particle counting. As an example, it is possible to capture an image of the relevant imaging area with the analyzer 16 removed from the optical path. The insertion and removal of the analyzer into and from the optical path, and the azimuth of the analyzer can be provided by drive means as necessary, and controlled by a computer. When capturing images of one imaging area has been completed as described above, the imaging area is shifted to another imaging area as necessary.

Next, returning to FIG. 2 to describe the processing for the present embodiment, the processing for identifying a particle candidate region (S22) is performed. Although the present embodiment is described so that the acicular region counting processing (S30) is executed after the particle counting processing (S20) is performed, this order of processing can be reversed, or these processing can also be performed simultaneously using separate processors. Also, any of the first to third images captured as a result of the processing shown in FIG. 3 can be used. In addition, the background image is used.

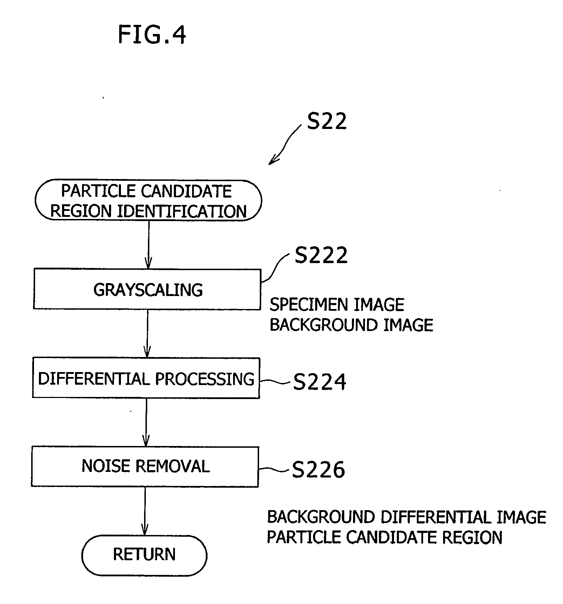

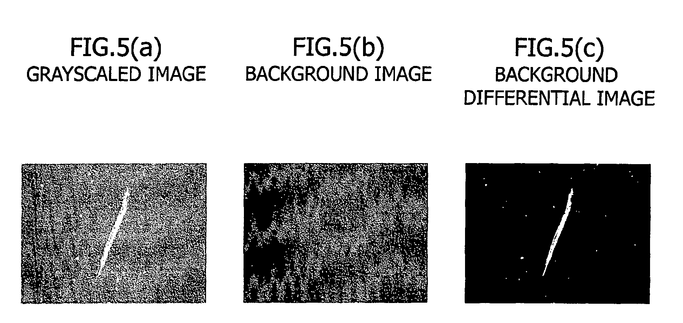

The processing for identifying a particle candidate region (S22) will be described with reference to FIG. 4. A particle candidate region in the present embodiment is a region that the image processing may determine to have a high possibility of containing a particle in the image. In order to identify a particle candidate region, the processing for grayscaling the captured original image is performed (S222). This grayscaling makes it possible to, for example, use data for only a particular original color from among image data captured in the three original color (RGB) format and discard the other data, or use processing such as making the data be luminance data by means of proper matrix computation. An example of a specimen image and a grayscaled image used in this processing are shown in FIG. 5(A).

Next, differential processing (S224) is performed. Differential processing is processing for subtracting data for the pixels of the grayscaled background image from data for the pixels of the grayscaled original image. In differential processing, sparse noise components contained in the image remain in a nonzero value, and they may become indistinguishable from the particles in the subsequent processing, and accordingly, the processing for removing such noise components is performed (S226). This noise removal processing is processing for making data for a pixel whose differential-image pixel value is equal to or lower than a certain value be 0. Thus, a background differential image is obtained by reducing the background components and removing the noise components.

FIG. 5 shows an image in which an image taken of a specimen has been grayscaled (FIG. 5(A)); an image in which an image taken of a background has been grayscaled (FIG. 5(B)); and a background differential image created from these images (FIG. 5(C)). As shown in the Figures, in the background differential image, an image in which image irregularities and noises have been removed can be obtained.

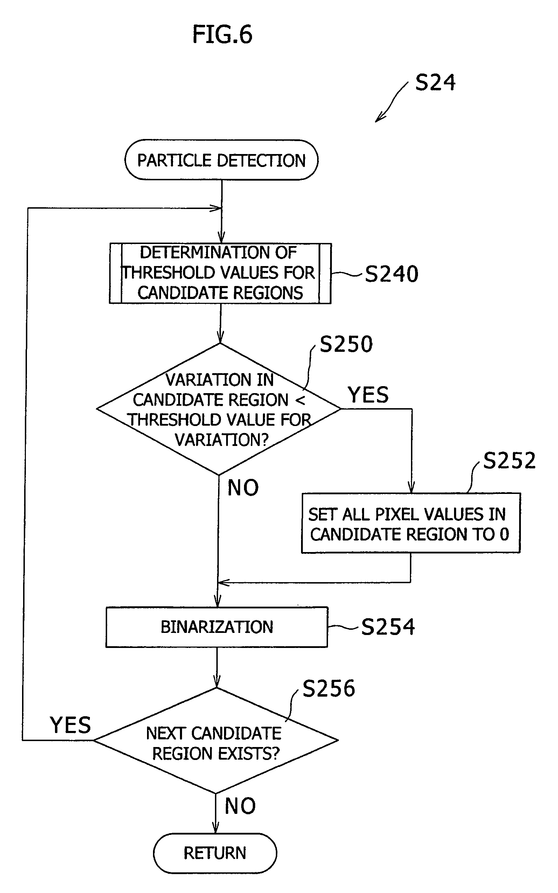

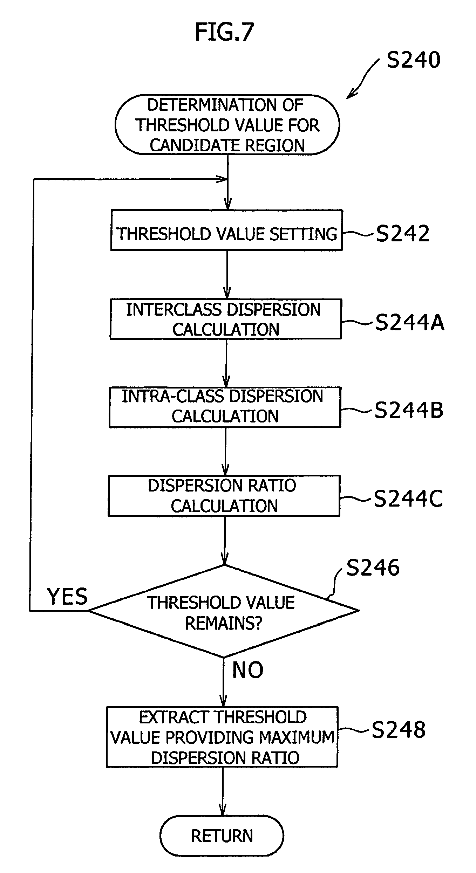

Next, particle detection processing is performed on the thus-obtained background differential image (S24). FIGS. 6 and 7 show the processing flow of this particle detection processing. In the processing according to the present embodiment, particles are detected by setting different threshold values for the respective candidate regions using the discriminant analysis method (S240). A candidate region refers to a region surrounded by pixels having a pixel value equal to or close to 0 in a background differential image. A background differential image, as described above, is one obtained by subtracting a background image from an original image after grayscaling, and an image having a pixel value equal to or close to 0 at that time corresponds to an image having a pixel value obtained by subtracting the pixel value of the grayscaled background level from the grayscaled original image. Since noise removal processing has been performed previously, there may also be a minor difference when the pixel value is a small but nonzero value; however, such difference is not essential.

The candidate regions are associated with different thresholds values. One of the methods for determining these threshold values based only on the statistical nature of data for the respective candidate regions is the discriminant analysis method. Other than the discriminant analysis method, methods such as the p-tile method and the mode method can be used.

In the discriminant analysis method, a histogram is classified by a certain threshold value into two classes; a threshold value at which the ratio between the interclass dispersion and the intra-class dispersion becomes a maximum (local maximum) is calculated, and that threshold value is used as the threshold value for classification. In other words, in this embodiment, when a threshold value is set for a candidate region by means of a grayscaled image expressed by 256-shade pixel values, for example, using a threshold value t, the candidate region is binarized by being classified into a class of 0 to t-1 (class 0) and a class of t to D (where D = 255) (class 1). Here, where the average density of class 0, the average density of class 1, and the entire average density are

[Formula 1]

$$\bar{f}_0, \quad \bar{f}_1, \quad \bar{f} \quad ,$$

respectively, the interclass dispersion

$$[\text{Formula } 2]$$

$$\sigma_{\mathrm{B}}^{2},$$

and the intra-class dispersion

$$[\text{Formula } 3]$$

$$\sigma_{\mathrm{I}}^{2}$$

can be obtained by

$$[\text{Formula } 4]$$

$$\sigma_{\mathrm{B}}^{2}(t) = \frac{\sum_{k=0}^{t-1} n_k (\bar{f}_0 - \bar{f})^2 + \sum_{k=t}^{D} n_k (\bar{f}_1 - \bar{f})^2}{\sum_{k=0}^{D} n_k}$$

and

$$[\text{Formula } 5]$$

$$\sigma_{\mathrm{I}}^{2}(t) = \frac{\sum_{k=0}^{t-1} n_k (k - \bar{f}_0)^2 + \sum_{k=t}^{D} n_k (k - \bar{f}_1)^2}{\sum_{k=0}^{D} n_k},$$

respectively. Here, $n_k$ is the number of pixels having a pixel value of k. The value t at which the dispersion ratio at this time, i.e.,

$$[\text{Formula } 6]$$

$$F_0(t) = \frac{\sigma_{\mathrm{B}}^{2}}{\sigma_{\mathrm{I}}^{2}}$$

becomes maximum is employed as a threshold value, and the candidate region is binarized.

FIG. 7 shows the flow of the processing for setting a threshold value using this discriminant analysis method. First, the threshold value t is set to be an appropriate value (S242), the interclass dispersion is calculated according to Formula 4 (S244A), and the intra-class dispersion is calculated according to Formula 5 (S244B). This order of processing may be reversed. The dispersion ratio is calculated from the interclass dispersion and the intra-class dispersion according to Formula 6 (S244C). Subsequently, whether or not there is any remaining threshold value to be used (S246), and if any, the threshold value is set to a new value and the calculation is repeated. Also, after the calculation has been performed on the all the threshold values, the threshold value that provides the maximum dispersion ratio is extracted (S248). The initial value of the threshold value for the loop calculation shown in FIG. 7 is set to 0, for example, and in the threshold value setting S242, the threshold value is incremented.

In the present embodiment, a device for further enhancing the accuracy is made. Even though the aforementioned noise removal is performed, noise may still remain in the background differential image. At that time, since the images of the particles including ones in the form of acicular crystals are accompanied by the reflection (or halo) of the phase-contrast microscope 10, positional changes can be seen in the pixel values in the candidate region, while such change cannot be seen in noise. Accordingly, in the image data for such images, the pixel values of the regions with changes or variations smaller than a certain value are set to 0. This processing is referred to as "non-variation noise removal" in the present invention. Here, although this certain value (variation threshold value) may greatly vary depending on the imaging conditions of the image, etc., it may be determined empirically.

FIG. 6 also shows the processing after the processing for determining the threshold values for the candidate regions (S240) . As a result of the binarization being performed by means of the threshold value determined for each candidate region (S254), each candidate region is binarized by the threshold value related to the candidate region, and this is repeated with regard to all the candidate regions (S256). As a result, all the candidate regions within the background differential image are binarized. At that time, when performing the aforementioned non-variation noise removal processing, the variation of each candidate region is compared with a variation threshold value (S250), all the pixel values in the candidate region that exhibit only a variation smaller than the variation threshold value are made to 0 (S252). As a result of this processing, together with the binarization processing (S254), an image (binary image) in which only the pixels are observed as particles in the phase-contrast microscope have values that are not 0 can be obtained.

The thus-obtained binary image correctly reflects the positions of particles as image data. Next, the number of particles in this binary image is totaled (FIG. 2, S26) . For this processing, labeling processing is employed.

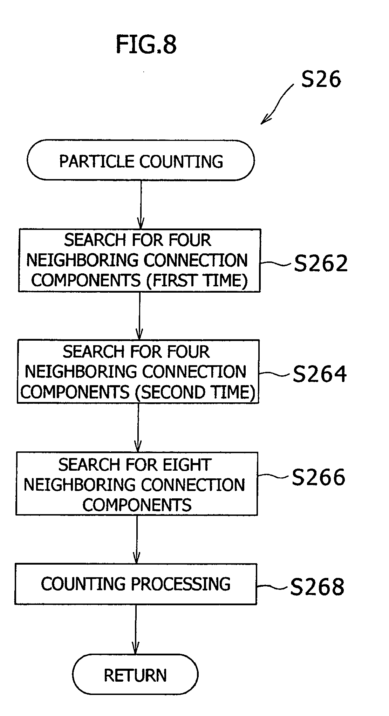

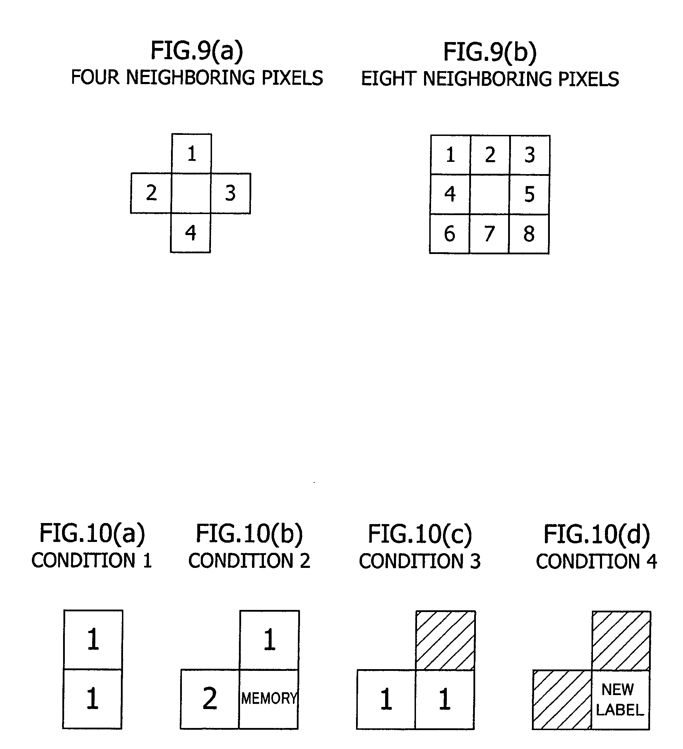

The flowchart in FIG. 8 shows the processing for counting the number of particles including labeling processing. FIG. 9 shows explanatory diagrams illustrating the relationship between a pixel of interest and its neighboring pixels, and FIG. 10 is an explanatory diagram for describing the conditions used in labeling processing. In this embodiment, the processing is performed by detecting four neighboring connection components (FIG. 9(A)) and eight neighboring connection components (FIG. 9(B)) in neighboring pixels of a pixel of interest. More specifically, a raster scan is performed twice on the image to search for four neighboring connection components (FIG. 8, S262 and S264), and one more raster scan is performed to search for eight neighboring connection components (S266). The four neighboring connection components can be obtained by performing the raster scan while performing the processing according to the following four conditions on the pixel of interest, and performing the processing twice:

Condition 1: where the upper pixel is a white pixel, providing the same label as that of the upper pixel to the pixel of interest (FIG. 10(A));

Condition 2: where the upper and left pixels are both white pixels and provided with different labels, recording the label of the pixel of interest (FIG. 10(B));

Condition 3: where the upper pixel is a black pixel, and the left pixel is a white pixel, providing the same label as that of the left pixel (FIG. 10(C)); and

Condition 4: where the upper and left pixels are both black pixels, providing a new label (FIG. 10(D)).

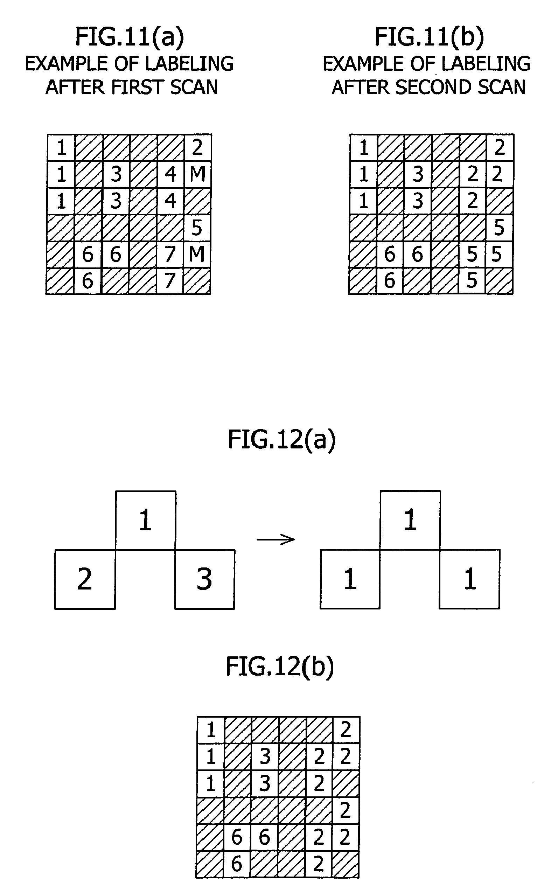

FIG. 11 shows an example of labeling after the first scan, and an example of labeling after the second scan. In the example of this image, the main scan is performed rightward from the upper left side, and the vertical scan is performed downward from the upper side, thereby shifting the pixel of interest. FIG. 11 shows the result of the processing according to the aforementioned four conditions being applied to the pixels once (FIG. 11(A)) and the result of the processing being applied once more ((FIG. 11(A)) in these scans.

Subsequently, the processing for search for eight neighboring connection components is performed. FIG. 12 shows the state of this processing. In this processing, the label of the pixel of interest is compared with the label of the lower left pixel, and also, the label of the pixel of interest is compared with the label of the lower right pixel, and sequentially making the labels be the same so that the label of the pixel of interest is the same as those of the lower left and lower right pixels. FIG. 12(A) shows the state in which the labels are made to be the same at this stage. As a result, as shown in FIG. 12(B), labeling processing providing eight connected neighboring pixels is performed.

The number of labeled regions is counted after such labeling processing, and such number is determined to be the number of particles contained in the binary image. In the above processing, the particles in the image are counted irrespective of their shapes. Accordingly, they are counted irrespective of whether or not the particles seen in the processing target image (any of the first to third images) are acicular crystals.

Next, the acicular region counting processing (FIG. 2, S30) will be described. The case where asbestos crystals are counted as an aspect of the acicular region counting processing will be described with reference to FIGS. 2, 13, 8 and 15.

The acicular region counting processing, as shown in FIG. 2, consists of the processing for identifying an asbestos crystal candidate (S32), and the processing for detecting an asbestos crystal (S34), and the processing for counting the number of asbestos crystals and identifying the crystals (S36).

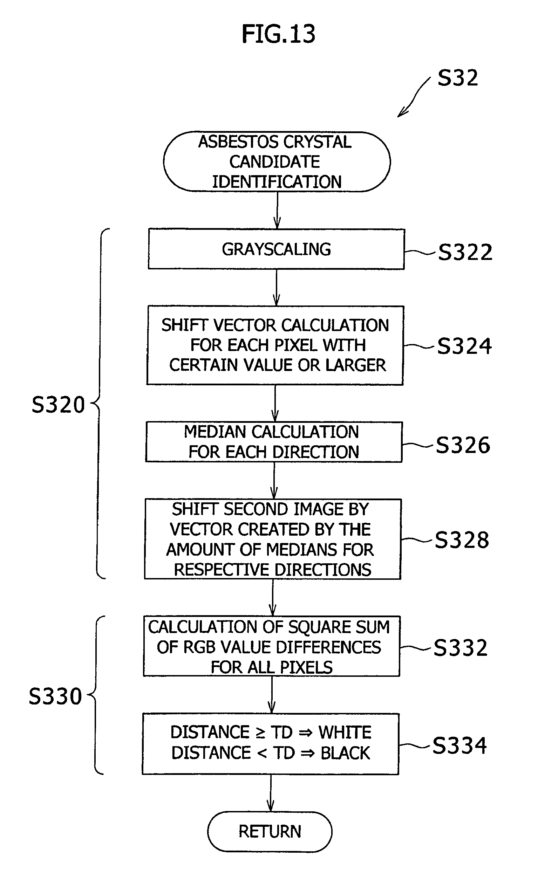

The processing for identifying an asbestos crystal candidate will be described with reference to FIG. 13. The asbestos crystals are measured using the first image taken according to the first imaging condition, and the second image taken according to the second imaging condition. As described above, these images are a pair of images taken by changing the azimuths of the analyzer, for example. For these images, the images of the imaging area that are completely the same can be obtained in principle, but in actual use where measurement is performed using a microscope, the position where the image is captured may be shifted when observed minutely, due to the effect of machinery vibration or the rotational components such as the analyzer. In many cases, such shifting occurs in a parallel direction, but even such minute shifting of the imaging area may cause an impact on the processing for counting acicular regions. In the present embodiment, position correction processing (or aligning processing) S320 is performed for such unintended shifting, and then, the processing for the two images is performed (S330).

The position correction processing S320 is started by grayscaling the first image and the second image. Grayscaling is executed to exclude irregularities in data with poor coherency that can often be seen when original three color data (RGB data) is used and accurately calculating a shift vector. Accordingly, it is preferable that one value for each pixel is calculated using RGB data when grayscaling is performed. The grayscaling is performed for position correction, but the subsequent processing (S330) is performed on an image that is not grayscaled.

After the first and second images have been grayscaled, a shift vector is calculated for each of the pixels having a certain pixel value or larger (S324). A shift vector is a vector necessary to superpose the pixels of one image on the pixels of the other image, and it can be calculated for each pixel, depending on where the same pixel value as that of data for a pixel in one grayscaled image appears among corresponding neighboring pixel positions in the other image. More specifically, a pixel having the same pixel value as that of a pixel of interest $(x_{1i}, y_{1i})$ in one image is searched for from 48 pixels in the other image neighboring the position of the corresponding pixel of interest $(x_{2i}, y_{2i})$ (the range of 7 by 7 pixels). Thus, sets Sx and Sy of displacements $(\Delta x_i, \Delta y_i)$ in two directions x and y within the image, the displacements being necessary for position correction of shifting for obtaining the same pixel value, can be obtained by:

[Formula 7]

$$\begin{cases} S_x = \Delta x_i & (i = 1, 2, \Lambda\ n) \\ S_y = \Delta y_i & (i = 1, 2, \Lambda\ n) \end{cases}$$

where $(\Delta x_i, \Delta y_i) = (x_{2i} - x_{1i}, y_{2i} - y_{1i})$, and n is the number of pixels.

These sets become data having a large variation in the present embodiment. The present inventors assume that such large irregularities are caused due to minute errors generated by the difference in polarizing direction between the two shots of images with different analyzer azimuths. It is necessary to perform alignment with one vector for the entire images, but in order to conform to the case where there is a large variation, a median is calculated and used as a statistic.

In order to obtain medians, first, the data rows, which are the sets of sorted components of the shift vector, are defined as:

[Formula 8]

$$\begin{cases} \widetilde{S}_x = \Delta \widetilde{x}_i & (i = 1, 2, \Lambda\ n) \\ \widetilde{S}_y = \Delta \widetilde{y}_i & (i = 1, 2, \Lambda\ n) \end{cases}$$

and the medians of each set is calculated by

[Formula 9]

$$x_c = \begin{cases} \Delta\tilde{x}_{\frac{n+1}{2}} & (\text{when } n \bmod 2 = 1) \\ \frac{1}{2}\left( \Delta\tilde{x}_{\frac{n}{2}} + \Delta\tilde{x}_{\frac{n}{2}+1} \right) & (\text{when } n \bmod 2 = 0) \end{cases}$$

$$y_c = \begin{cases} \Delta\tilde{y}_{\frac{n+1}{2}} & (\text{when } n \bmod 2 = 1) \\ \frac{1}{2}\left( \Delta\tilde{y}_{\frac{n}{2}} + \Delta\tilde{y}_{\frac{n}{2}+1} \right) & (\text{when } n \bmod 2 = 0) \end{cases}$$

(S326) . The second image, which is not grayscaled, is shifted by the shift vector created by the thus-obtained medians (S328) to make it to a new second image. Hereinafter, unless specifically mentioned otherwise, this new second image is simply referred to the second image.

Next, processing for the two images S330 will be described. For the corresponding pixels between the first image and the second image, the differences in RGB value are calculated and each of the differences is multiplied by itself and the sum of the multiplied differences is calculated (S332). This value corresponds to the square of the distance in the RGB space. Then, pixels having a certain distance value (td) is made to be white and pixels having a distance value smaller than the certain value are made to be black (S334).

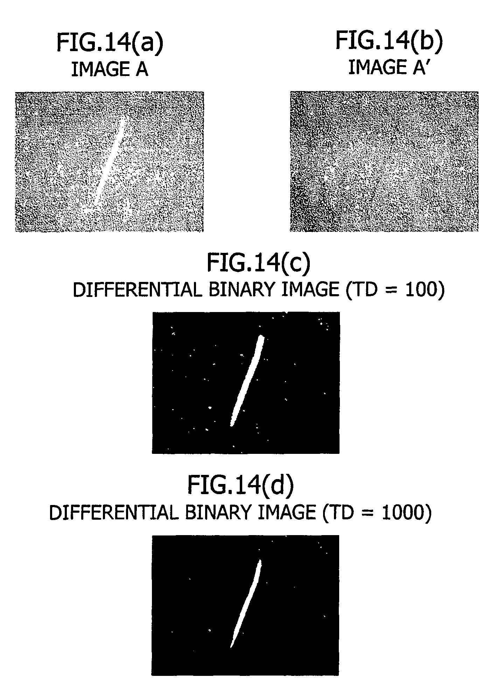

An example of an image at each stage of obtaining a binary image in such a manner described above is shown in FIG. 14. FIGS. 14(A) and 14(B) show the first image and the second image used in this processing, and FIGS. 14(C) and 14(D) each show a binary image obtained by the processing S32 for identifying an asbestos crystal candidate from the first image and second image where td is 100 and where td is 1000, respectively. In the present embodiment, when td is set to a small value, for example, 100. This is because if td is set to a large value, for example, 1000, the possibility that the regions not selected as acicular regions may include regions that should be judged to be asbestos when counting asbestos, for example, is increased.

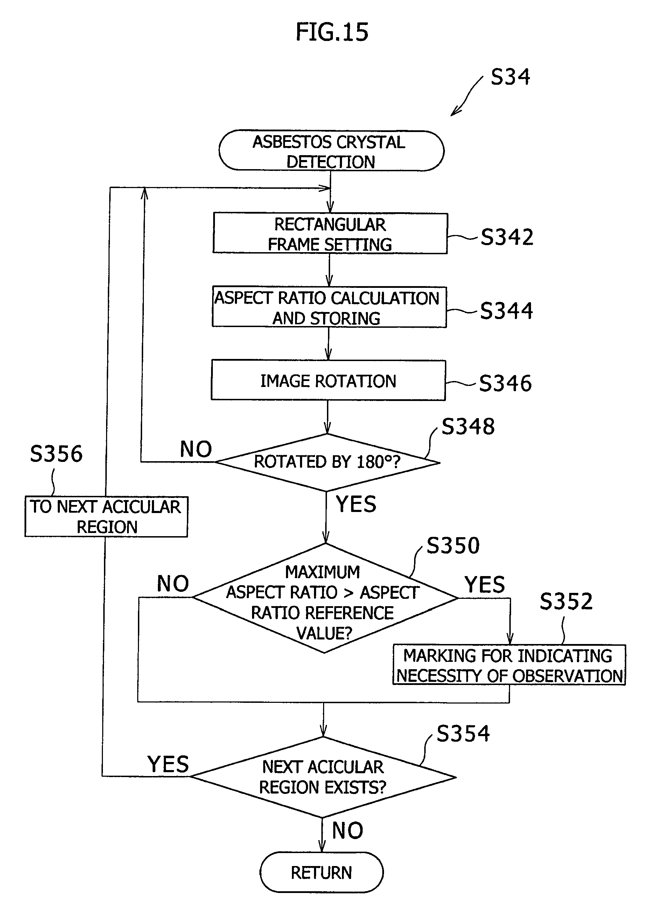

Next, the processing for detecting an asbestos crystal will be described with reference to FIG. 15. First, a rectangular region is set in an acicular region in a binary image (S342). This rectangular region is a quadrangle that may be a rectangle or a square circumscribing the acicular region. Since the rectangle can turn to any direction, there are numerous setting methods, but here, the direction is determined according to an x-y coordinate that provides the positions of the pixels of image data. As a result of performing this processing, the range of the x-coordinate included in the acicular region corresponds to the length in the x-direction of the rectangular region, and the range of the y-coordinate corresponds to the length in the y-direction. Thus, the aspect ratio can be calculated (5344) . The aspect ratio is stored in a proper storage unit in relation to the acicular region.

Next, the image is rotated. In the present embodiment, the image is rotated by every 30 degrees. The image can easily be rotated by rotational transformation (S346). The aspect ratio is measured for each angle, and this processing loop is terminated when the image is rotated by 180 degrees (S348). Then, the maximum value is selected from the stored aspect ratios for the respective rotation angles.

In the present embodiment, acicular regions are selected focusing on their shapes. For example, in a qualitative analysis of asbestos employing the present embodiment, whether or not the particle is counted is determined depending on whether its aspect ratio is no less than 3:1 or less than 3:1. Accordingly, in the present embodiment, the reference value for selecting a particle as an acicular region is set to an aspect ratio of a value close to and smaller than 3:1, for example, 2.0:1. Then, the reference value is compared with the maximum value of the aspect ratio (S350), if the maximum value exceeds the reference value, the relevant acicular region is marked (S352). This processing is repeated until no acicular regions appear in the imaging area (S354 and S356).

Setting the aspect ratio to a value smaller than the original reference value is intended to prevent selection failure, and in this embodiment, in addition to mere selection failure prevention, it is also conducted because as a result of the reflection in the phase-contrast microscope, a shape forming an acicular region on the image may be judged to be a shape with a slightly small aspect ratio including the reflection part observed around the acicular region.

Tables 1 to 3 show data indicating the detection failure count and erroneous detection count when the aspect ratio reference value has been changed for chrysotile, amosite and crocidolite, respectively. Although some differences can be seen depending on the kind of asbestos, all of the data shows small values in both the detection failure count and the erroneous detection count at aspect ratio reference values of around 2.0:1, which shows that the analysis method according to the present embodiment can be employed.

[Table 1]

| (A) Chrysotile | | |
|---|---|---|
| Aspect ratio | Detection failure count (pieces) | Erroneous detection (pieces) |
| 1.5 | 0 | 2 |
| 1.6 | 0 | 1 |
| 1.7 | 0 | 1 |
| 1.8 | 0 | 0 |
| 1.9 | 0 | 0 |
| 2.0 | 0 | 0 |
| 2.1 | 1 | 0 |
| 2.2 | 1 | 0 |
| 2.3 | 1 | 0 |
| 2.4 | 2 | 0 |
| 2.5 | 2 | 0 |
| 2.6 | 2 | 0 |
| 2.7 | 3 | 0 |
| 2.8 | 3 | 0 |
| 2.9 | 3 | 0 |
| 3.0 | 3 | 0 |

[Table 2]

| (B) Amosite | | |
|---|---|---|
| Aspect ratio | Detection failure count (pieces) | Erroneous detection (pieces) |
| 1.5 | 0 | 2 |
| 1.6 | 0 | 2 |
| 1.7 | 0 | 2 |
| 1.8 | 0 | 2 |
| 1.9 | 0 | 0 |
| 2.0 | 0 | 0 |
| 2.1 | 0 | 0 |
| 2.2 | 0 | 0 |
| 2.3 | 0 | 0 |
| 2.4 | 0 | 0 |
| 2.5 | 0 | 0 |
| 2.6 | 0 | 0 |
| 2.7 | 0 | 0 |
| 2.8 | 1 | 0 |
| 2.9 | 1 | 0 |

(continued)

| (B) Amosite | | |
| --- | --- | --- |
| Aspect ratio | Detection failure count (pieces) | Erroneous detection (pieces) |
| 3.0 | 1 | 0 |

[Table 3]

| (C) Crocidolite | | |
| --- | --- | --- |
| Aspect ratio | Detection failure count (pieces) | Erroneous detection (pieces) |
| 1.5 | 0 | 6 |
| 1.6 | 0 | 4 |
| 1.7 | 0 | 2 |
| 1.8 | 0 | 2 |
| 1.9 | 0 | 0 |
| 2.0 | 0 | 0 |
| 2.1 | 0 | 0 |
| 2.2 | 0 | 0 |
| 2.3 | 0 | 0 |
| 2.4 | 0 | 0 |
| 2.5 | 0 | 0 |
| 2.6 | 0 | 0 |
| 2.7 | 0 | 0 |
| 2.8 | 0 | 0 |
| 2.9 | 0 | 0 |
| 3.0 | 0 | 0 |

The present invention provides not only an analysis method and an analysis system, but also counting processing for an observer to re-conduct an acicular region judgment based on an image or in particular, specifying the position for acicular region observation, using the method according to the aforementioned embodiment as a screening method before the observer reviews the specimen. In this aspect, it is possible to assist the observer with re-conducting of acicular crystal judgment by enabling the observer to review a captured image, or the image observer to directly observe the image with the microscope for review. In the former case, it is possible that, using a part of the proper storage means storing information (image correspondence information) for identifying acicular regions and relating them to the images, as an image relation storing unit, when an acicular region is specified by, for example, by the receipt of selection of the acicular region from an observer or as a result of the acicular region being selected according to some rule such as sequentially displaying acicular regions having a certain aspect ratio or larger when they are found, the corresponding image is specified based on the information in the image relation storing unit, and the image is retrieved up afterward to show it on the display. As a result, the observer can retrieve the image of the judged acicular region, and review the region based on the image. Also, in the latter case, information for identifying acicular regions and positional information for specifying the positions of the acicular regions in the specimen are related to each other. For example, stage encoder information for identifying acicular regions by means of proper IDs and specifying an imaging area according to those IDs, and coordinate data indicating the positions of acicular regions in the imaging area are held in a coordinate data storing unit. Upon the receipt of selection of an acicular region or an acicular region being selected according to a predetermined rule, the positional information for the selected acicular region is retrieved up from the positional data storing unit. Visual observation is conducted using the same microscope used at the stage of the initial image being taken, or another microscope using a preparation with a device enabling position specification. In other words, in order to enable observation according to the positional information, for example, observation is carried out using a microscope having an automatic stage that can be controlled from the device control interface of the computer 30, or the observer can move the stage manually by showing the movement destination coordinate to the observer via the display 32. Thus, the observer can visually observe an object judged to be an acicular region through the eyepiece lens of a microscope, or through a direct image from the camera 18 shown in FIG. 1.

[Example 1]

The analysis method described in the embodiment above was confirmed using actual asbestos standard samples. For the standard samples, samples of chrysotile, amosite and crocidolite (provided by Japan Association for Working Environment Measurement), which are asbestos that have commercially been used in Japan, were used.

[Table 4]

| Image type | For particle counting (images) | For asbestos crystal counting (images) |
|---|---|---|
| Sample containing chrysotile | 41 | 78 (39 sets) |
| Sample containing amosite | 58 | 108 (54 sets) |
| Sample containing crocidolite | 37 | 76 (38 sets) |
| Background image | 1 | 0 |
| Table 4 shows the numbers of images used in the Example. | | |

[Table 5]

| Results | Chrysotile | Amosite | Crocidolite |
|---|---|---|---|
| Actual total particle count (pieces) | 1112 | 2668 | 6724 |
| Measured total particle count (pieces) | 1103 | 2647 | 6671 |
| Percentage of particles counted (%) | 99.19 | 99.21 | 99.21 |
| Margin of error compared with original image (%) | -0.81 | -0.79 | -0.79 |

Table 5 shows the results of measuring the number of particles in these images using the method according to the embodiment of the present invention. For particle measuring, the visually-measured particles were counted at a high accuracy exceeding 99%. In an actual visual observation, because of the nature of the method, all the particles exiting in the field of view are not always counted, and therefore, the particle measurement according to the present embodiment provides sufficient accuracy and it is sufficient as processing used for preliminary processing for analysis. In particular, the embodiment can properly count the number of particles by means of processing using a computer, which is different from a judgment according to the conventional Official Protocol in which thousands of particles are visually observed using a microscope, and it enables an observer to perform an observation focusing on visual judgment of acicular regions, providing a sufficient advantageous effect.

[Example 2]

Next, an example of asbestos crystal measurement will be described. The acicular region counting processing S30 was performed on the images shown in Table 4.

[Table 6]

| Image type / Results | Samples containing chrysotile | Samples containing amosite | Samples containing crocidolite |
|---|---|---|---|
| Actual asbestos count (pieces) | 149 | 167 | 72 |
| Measured asbestos count (pieces) | 182 | 210 | 214 |
| Average detection failure count (pieces) | 0.37 | 0.34 | 0.21 |
| Average erroneous detection count (pieces) | 1.22 | 1.13 | 3.95 |

Table 6 shows the asbestos counts obtained by actual visual observations and the asbestos counts obtained by the measurement for the respective samples. The Table also provides the average detection failure count and the average erroneous detection count per image. As shown in the Table, it was confirmed that the analysis method according to the present embodiment has usefulness that can provide sufficient assistance for an observer's visual observation also in crystal counting.

According to any of the aspects of the present invention, it is possible to, at least when an observer observes an image to search for, for example, asbestos using, for example, the Official Protocol, count numerous particles in the observation object specimen, and count candidates that may be asbestos from them. Also, it is possible to enhance the accuracy of particle counting, or the accuracy of acicular crystal counting.

According to any of the aspects of the present invention, it is possible to, when observing, for example, asbestos using, for example, the Official Protocol, assist an observer with the observation, and reduces the burden on the observer. Also, according to the present invention, at least a part of an acicular crystal analysis of, for example, asbestos according to the aforementioned current Official Protocol or the other methods using images can be conducted.

Furthermore, according to any of the aspects of the present invention, it is possible for an observer to retrieve an image identified as an acicular region onto a display for review, or to visually review the specimen at the position where the specimen is identified as an acicular region.

Although the embodiment of the present invention has been described above, the present invention is not limited to the aforementioned embodiment, various alterations, modifications and combinations are possible based on the technical idea of the present invention. For example, in FIGS. 2 and 3, the imaging area is shifted immediately after the capture of an image, but it is also possible that each imaging area is shifted after the image capture S12 to the specimen analysis processing S14 are performed for the imaging area.

Although the description has been made mainly on an embodiment using a phase-contrast microscope, other types of imaging apparatus can also be used. For example, it is possible to, using a polarization microscope instead of a phase-contrast microscope, rotate a polarizer and an analyzer included in the polarization microscope at an angle maintained between them, or analyze a specimen at least using two images obtained by rotating the stage. Also, the scope of the claims in the present application includes the use of any image capture means providing acicular crystal image data or image-neighboring data that may vary depending on the imaging condition, besides the techniques in which images can be captured by an optical microscope.

Although in the embodiment using a phase-contrast microscope, an example in which two azimuths perpendicular to each other are employed as the azimuth of the analyzer, these azimuths may be a combination of arbitrary angles perpendicular to each other, and for example, when the tone difference greatly varies depending on the relationship between the direction of the crystal and the azimuth of the analyzer, an image according to another azimuth can be added.

Also, the imaging conditions that may change acicular crystal image data or image-neighboring data may include, for example, changing the temperature of the specimen to take an image of it using the temperature dependency of the refractive index of an immersion liquid for asbestos detection, and thus, they are not limited to conditions for an apparatus for image-taking, and include arbitrary conditions relating to acicular crystal images.

**Claims**

1. A specimen analysis method for analyzing an acicular crystal in a specimen of an unidentified sample using a captured image of the specimen, the method comprising steps of:

   capturing a first image of an imaging area in the specimen under a first imaging condition;

   capturing a second image of the imaging area in the specimen under a second imaging condition, the first imaging condition and the second imaging condition being conditions providing mutually different data on an image of the acicular crystal or an area neighboring the image in their captured images;

   counting a particle region by setting, as an original image, any of the first image, the second image or a third captured image of the imaging area in the specimen, counting the number of regions that have pixel values different from a pixel value of a background in the original image, and at least storing or outputting the result of the counting; and

   counting an acicular region by obtaining a differential image based on a difference in data between the first image and the second image, selecting acicular regions based on the differential image, counting the number of the selected acicular regions, and at least storing or outputting the result of the counting.

2. The specimen analysis method according to claim 1, wherein the step of counting particle region includes steps of:

   grayscaling the original image to make the original image be a grayscale image;

   determining a threshold value related to a candidate region surrounded by pixels each having a pixel value of a grayscaled background level from the grayscale image based on statistics on pixel values of the candidate region;

   binarizing each candidate region based on its related threshold value to obtain a binary image; and

   counting the regions having the different pixel values in the binary image by labeling each of the regions.

3. The specimen analysis method according to claim 2, wherein the step of determining the threshold value further includes steps of:

   calculating a differential image by subtracting pixel values of the background level from pixel values of the grayscale image to obtain a background differential image having a pixel value of 0 at the background; and

   making the region surrounded by the pixels of the background level be a region surrounded by pixels each having a pixel value equal or close to 0 in the background differential image.

4. The specimen analysis method according to claim 2, wherein the step of determining the threshold value includes steps of:

   calculating an intra-class dispersion and an interclass dispersion with regard to each of two classes separated by a threshold value in a distribution of the pixel values for the candidate region;

   calculating a ratio of the interclass dispersion to the intra-class dispersion; and

   re-setting the threshold value in relation to the candidate region, the step of determining the threshold value being a step that is based on a discriminant analysis method and determines the threshold value so that the ratio becomes maximum or local maximum.

5. The specimen analysis method according to claim 4, wherein the step of binarizing includes removing a non-variation noise by, when a variation of a pixel value within a candidate region is smaller than a predetermined variation threshold value, making the pixel value of the candidate region be 0.

6. The specimen analysis method according to claim 5, wherein:

   the step of calculating the differential image includes removing a noise by making data for a pixel having a certain value or smaller in the background differential image be 0 to obtain a new background differential image; and

   the steps of determining the threshold value and removing the non-variation noise are executed on the new background differential image.

7. The specimen analysis method according to claim 1, further comprising a step of aligning the first image and the second image with each other.

8. The specimen analysis method according to claim 7, wherein the step of aligning includes steps of:

comparing a pixel value of each pixel in the first image with pixel values of a corresponding pixel and its neighboring pixels in the second image for calculating a pixel position shift vector that is necessary to obtain an equal pixel value for the first and the second images; calculating the shift vector with regard to all the pixels in a predetermined region in the first image to calculate a median of a distribution of each of components of the shift vector; and shifting the pixel positions in the first image or the second image by a vector created by the medians of the distributions of the components.

9. The specimen analysis method according to claim 1, wherein the acicular region counting step includes steps of:

calculating a tone variation between the first image and the second image to obtain the differential image; and binarizing the differential image based on a predetermined tone variation threshold value to obtain a tone binary image.

10. The specimen analysis method according to claim 1, wherein the acicular region counting step includes steps of:

calculating an aspect ratio of a shape of each of the regions each having a large tone variation in the differential image; comparing the aspect ratio with a predetermined aspect ratio threshold value; selecting a region having an aspect ratio equal or larger than the aspect ratio threshold value from the regions having the large tone variation in the differential image to determine the region to be an acicular region; and counting the acicular regions by labeling each acicular region based on the differential image.

11. The specimen analysis method according to claim 10, wherein the step of calculating the aspect ratio includes steps of:

determining a rectangular area circumscribing the shape of each of the regions each having the large tone variation with regard to each of a plurality of images obtained by rotating the differential image; and selecting a maximum aspect ratio from among the aspect ratios of the respective rectangular areas as the aspect ratio of the relevant region having the large tone variation.

12. The specimen analysis method according to claim 10, wherein the acicular region counting step includes a step of relating an identifier for identification to each acicular region based on the labeling to enable retrieving an image of each acicular region.

13. The specimen analysis method according to claim 1, wherein:

the unidentified sample is an unidentified sample of a pulverized building material; the specimen is a specimen prepared by immersing the sample of the pulverized building material in an immersion liquid having a known refractive index substantially equal to a refractive index of an asbestos crystal of a kind that may be contained in the sample; the first imaging condition and the second imaging condition are conditions for capturing an image of the specimen using a phase-contrast microscope in which their respective azimuths of a polarizer inserted from the specimen to an optical path are different for each condition; the method further includes steps of:

providing information indicating a possibility that the relevant acicular region is an asbestos crystal in the sample of the pulverized building material; and counting the particle region includes outputting or storing the number of regions counted as the number of observation object particles in the specimen.

14. A specimen analysis system for analyzing an acicular crystal in a specimen of an unidentified sample using a captured image of the specimen, the system comprising:

an image capturing unit adapted to take an image of the specimen of the unidentified sample according to a plurality of imaging conditions to capture image data; a first image recording unit for storing first image data for an imaging area in the specimen, the first image data being captured by the image capturing unit according to a first imaging condition;

a second image recording unit for storing second image data for the imaging area in the specimen, the second image data being captured by the image capturing unit according to a second imaging condition, the first imaging condition and the second imaging condition being conditions providing mutually different data on an image of the acicular crystal or an area neighboring the image in their taken images;

a particle region counting unit that sets any of the first image, the second image or a third image taken of the imaging area in the specimen, as an original image, and at least counts the number of regions in the original image that have pixel values different from a pixel value of a background and outputs the result;

an acicular region selecting unit that creates a differential image based on a difference in data between the first image and the second image read from the first image recording unit and the second image recording unit, and selects acicular regions based on the differential image;

an acicular region counting unit that counts the selected acicular regions and outputs the result; and

a count recording unit for storing the output of at least either the acicular region counting unit or the particle region counting unit as data.

**15.** The specimen analysis system according to claim 14, wherein the acicular region counting unit counts the acicular regions by labeling each acicular region, and relates an identifier for identification to each acicular region based on the labeling.

**16.** A specimen review apparatus comprising:

an image relation storing unit that stores information for image correspondence between information for identifying an acicular region from the analysis system according to claim 15, and at least any of the first image, the second image or the third image related to the acicular region;

selecting means for selecting the acicular region according to input means that receives a selection of the acicular region, or a predetermined rule;

a data retrieving unit that retrieves the image related to the selected acicular region from any of the first image recording unit, the second image recording unit and a recording unit that stores the third image, with reference to the image correspondence information in the image relation storing unit; and

a display unit that display the image.

**17.** A specimen review apparatus comprising:

a positional data storing unit that stores information for identifying an acicular region from the analysis system according to claim 15, and positional information for identifying a position of the acicular region in the specimen in relation to each other;

selection means for selecting the acicular region according to input mean that receives a selection of the acicular region, or a predetermined rule;

a data retrieving unit that retrieves positional information related to the selected acicular region from the positional data storing unit; and

at least either an observation device control unit adapted to control a specimen observation device related to the image capturing unit according to the retrieved positional information or a positional information display unit for presenting the retrieved positional information to an observer.

**18.** A recording medium comprising a computer program recorded therein, the computer program making a computer including a computing device and a storage device execute the analysis method according to any of claims 1 to 13.

# FIG.1

# FIG.2

S12 — IMAGE CAPTURING

S20

S30

S22 — PARTICLE CANDIDATE REGION IDENTIFICATION

S32 — ASBESTOS CRYSTAL CANDIDATE IDENTIFICATION

S24 — PARTICLE DETECTION

S34 — ASBESTOS CRYSTAL DETECTION

S26 — PARTICLE COUNTING

S36 — ASBESTOS CRYSTAL COUNTING AND IDENTIFICATION

S14 — SPECIMEN ANALYSIS PROCESSING

# FIG.3

```
        ( IMAGE CAPTURING )
                  │
                  ▼
     ┌─────────────────────────┐
     │   CAPTURE BACKGROUND     │ ~122
     │   IMAGE AND STORE IT     │
     └─────────────────────────┘
                  │
                  ▼
     ┌─────────────────────────┐
     │  PREPARATION OF SPECIMEN │ ~124
     └─────────────────────────┘
                  │
                  ▼
     ┌─────────────────────────┐
     │    SHIFT TO IMAGING AREA │ ~126
     └─────────────────────────┘
                  │
                  ▼
     ┌─────────────────────────┐
     │  SET FIRST IMAGING CONDITION │ ~128
     └─────────────────────────┘
                  │
                  ▼
     ┌─────────────────────────┐
     │ CAPTURE AND STORE FIRST IMAGE │ ~128A
     └─────────────────────────┘
                  │
                  ▼
     ┌─────────────────────────┐
     │ SET SECOND IMAGING CONDITION │ ~130
     └─────────────────────────┘
                  │
                  ▼
     ┌─────────────────────────┐
     │ CAPTURE AND STORE SECOND IMAGE │ ~130A
     └─────────────────────────┘
                  │
                  ▼
     ┌ ─ ─ ─ ─ ─ ─ ─ ─ ─ ─ ─ ─ ┐
     │  SET THIRD IMAGING CONDITION │ ···132
     └ ─ ─ ─ ─ ─ ─ ─ ─ ─ ─ ─ ─ ┘
                  │
                  ▼
     ┌ ─ ─ ─ ─ ─ ─ ─ ─ ─ ─ ─ ─ ┐
     │ CAPTURE AND STORE THIRD IMAGE │ ···132A
     └ ─ ─ ─ ─ ─ ─ ─ ─ ─ ─ ─ ─ ┘
                  │
                  ▼
               ◇ 136
        IMAGING AREA
     SHIFTING NECESSARY?
      YES ◇          ◇
                  │ NO
                  ▼
            ( RETURN )
```

20

# FIG.4

S22

```
┌─────────────────────────┐
│   PARTICLE CANDIDATE     │
│  REGION IDENTIFICATION   │
└─────────────────────────┘
            │
            ▼                    S222
┌─────────────────────────┐
│      GRAYSCALING        │      SPECIMEN IMAGE
└─────────────────────────┘      BACKGROUND IMAGE
            │
            ▼
┌─────────────────────────┐
│ DIFFERENTIAL PROCESSING │──S224
└─────────────────────────┘
            │
            ▼
┌─────────────────────────┐
│      NOISE REMOVAL      │──S226
└─────────────────────────┘
            │                    BACKGROUND DIFFERENTIAL IMAGE
            ▼                    PARTICLE CANDIDATE REGION
┌─────────────────────────┐
│         RETURN          │
└─────────────────────────┘
```

FIG.5(a)
GRAYSCALED IMAGE

FIG.5(b)
BACKGROUND IMAGE

FIG.5(c)
BACKGROUND
DIFFERENTIAL IMAGE

# FIG.6

S24

( PARTICLE DETECTION )

↓

| DETERMINATION OF THRESHOLD VALUES FOR CANDIDATE REGIONS | —S240 |

↓

S250

< VARIATION IN CANDIDATE REGION < THRESHOLD VALUE FOR VARIATION? >   **YES** →

**NO**
↓

S252

| SET ALL PIXEL VALUES IN CANDIDATE REGION TO 0 |

↓

| BINARIZATION | —S254 |

↓

S256

**YES** ← < NEXT CANDIDATE REGION EXISTS? >

**NO**
↓

( RETURN )

## FIG.7

S240

```
DETERMINATION OF
THRESHOLD VALUE FOR
CANDIDATE REGION
```

THRESHOLD VALUE SETTING — S242

INTERCLASS DISPERSION
CALCULATION — S244A

INTRA-CLASS DISPERSION
CALCULATION — S244B

DISPERSION RATIO
CALCULATION — S244C

S246

THRESHOLD VALUE
REMAINS?

YES

NO

EXTRACT THRESHOLD
VALUE PROVIDING MAXIMUM
DISPERSION RATIO — S248

RETURN

# FIG.8

S26

PARTICLE COUNTING

SEARCH FOR FOUR
NEIGHBORING CONNECTION
COMPONENTS (FIRST TIME) — S262

SEARCH FOR FOUR
NEIGHBORING CONNECTION
COMPONENTS (SECOND TIME) — S264

SEARCH FOR EIGHT
NEIGHBORING CONNECTION
COMPONENTS — S266

COUNTING PROCESSING — S268

RETURN

## FIG.9(a)
### FOUR NEIGHBORING PIXELS

| | 1 | |
|---|---|---|
| 2 | | 3 |
| | 4 | |

## FIG.9(b)
### EIGHT NEIGHBORING PIXELS

| 1 | 2 | 3 |
|---|---|---|
| 4 | | 5 |
| 6 | 7 | 8 |

## FIG.10(a)
### CONDITION 1

| 1 |
|---|
| 1 |

## FIG.10(b)
### CONDITION 2

| | 1 |
|---|---|
| 2 | MEMORY |

## FIG.10(c)
### CONDITION 3

| | ▨ |
|---|---|
| 1 | 1 |

## FIG.10(d)
### CONDITION 4

| | ▨ |
|---|---|
| ▨ | NEW LABEL |

## FIG.11(a)
EXAMPLE OF LABELING
AFTER FIRST SCAN

## FIG.11(b)
EXAMPLE OF LABELING
AFTER SECOND SCAN

## FIG.12(a)

## FIG.12(b)

# FIG.13

S32

┌─────────────────────────┐
│    ASBESTOS CRYSTAL     │
│      CANDIDATE         │
│    IDENTIFICATION      │
└─────────────────────────┘

```
┌─────────────────────────┐
│       GRAYSCALING       │──S322
└─────────────────────────┘

┌─────────────────────────┐
│  SHIFT VECTOR CALCULATION │
│    FOR EACH PIXEL WITH    │──S324
│  CERTAIN VALUE OR LARGER  │
└─────────────────────────┘
```

S320

```
┌─────────────────────────┐
│   MEDIAN CALCULATION     │──S326
│   FOR EACH DIRECTION     │
└─────────────────────────┘

┌─────────────────────────┐
│   SHIFT SECOND IMAGE BY  │
│  VECTOR CREATED BY THE   │──S328
│ AMOUNT OF MEDIANS FOR    │
│  RESPECTIVE DIRECTIONS   │
└─────────────────────────┘
```

```
┌─────────────────────────┐
│ CALCULATION OF SQUARE SUM │
│ OF RGB VALUE DIFFERENCES  │──S332
│      FOR ALL PIXELS       │
└─────────────────────────┘
```

S330

```
┌─────────────────────────┐
│  DISTANCE ≥ TD ⇒ WHITE   │──S334
│  DISTANCE < TD ⇒ BLACK   │
└─────────────────────────┘
```

┌─────────────┐
│   RETURN    │
└─────────────┘

## FIG.14(a)
### IMAGE A

## FIG.14(b)
### IMAGE A'

## FIG.14(c)
### DIFFERENTIAL BINARY IMAGE (TD = 100)

## FIG.14(d)
### DIFFERENTIAL BINARY IMAGE (TD = 1000)

# FIG.15

S34

ASBESTOS CRYSTAL
DETECTION

RECTANGULAR
FRAME SETTING — S342

ASPECT RATIO CALCULATION
AND STORING — S344

IMAGE ROTATION — S346

S348

S356

NO ROTATED BY 180°?

TO NEXT ACICULAR
REGION

YES

S350

NO MAXIMUM
ASPECT RATIO > ASPECT
RATIO REFERENCE
VALUE?

YES

S352

MARKING FOR INDICATING
NECESSITY OF OBSERVATION

S354

YES NEXT ACICULAR
REGION EXISTS?

NO

RETURN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005338567 A

- JP 2005233658 A